# EUROPÄISCHE PATENTANMELDUNG

(11) **EP 4 102 426 A1**
(43) Veröffentlichungstag der Anmeldung: **14.12.2022**
(21) Anmeldenummer: 22155889.3
(22) Anmeldetag: 09.02.2022
(51) Int. Cl.: G06Q 10/06, G06Q 50/02

(54) **VERFAHREN ZUR BESTIMMUNG EINER OPTIMIERTEN LANDWIRTSCHAFTLICHEN ANBAUSTRATEGIE**

(30) Priorität: 08.06.2021 DE 102021114697
(71) Anmelder: 365FarmNet Group KGaA mbH & Co. KG, 33428 Harsewinkel (DE)
(72) Erfinder: von Löbbecke, Maximilian, 14129 Berlin (DE)
(74) Vertreter: CLAAS Gruppe

(57) **Zusammenfassung**

Die vorliegende Erfindung betrifft ein Verfahren zur Bestimmung einer optimierten landwirtschaftlichen Anbaustrategie durch ein computergestütztes landwirtschaftliches Verwaltungssystem (1), gekennzeichnet durch die Verfahrensschritte:
- Bestimmen von Inputfaktoren (IF) durch Abfrage und/oder Auswertung von die zu bestimmende Anbaustrategie und/oder Fruchtfolgenplanung beeinflussenden Informationen, die in dem Verwaltungssystem (1) und in von dem Verwaltungssystem (1) unabhängigen externen Datenquellen (eD) hinterlegt sind oder an diese übermittelt werden;
- Bestimmen und Vorgeben mehrerer Optimierungsziele (OZ), die von dem Verwaltungssystem (1) durch Auswertung der Inputfaktoren (IF) vorgegeben werden;
- Auswählen zumindest eines der vorgegebenen Optimierungsziele (OZ) mittels einer Eingabe-Ausgabeeinheit (15);
- Optimieren einer Anbaustrategie und/oder Fruchtfolgenplanung für das zumindest eine ausgewählte Optimierungsziel (15) unter Einbeziehung der bestimmten Inputfaktoren (IF) sowie von Ressourcenplanung und Ressourcenmanagement; und
- Ausgeben der optimierten Anbaustrategie und/oder der optimierten Fruchtfolgenplanung mittels der Eingabe-Ausgabeeinheit (15).

## Beschreibung

Die vorliegende Erfindung betrifft ein Verfahren zur Bestimmung einer optimierten landwirtschaftlichen Anbaustrategie gemäß dem Oberbegriff des Anspruches 1. Weiterhin hat die Erfindung ein computergestütztes landwirtschaftliches Verwaltungssystem zum Gegenstand.

Fruchtwechsel bilden einen wichtigen Bestandteil der Landwirtschaft und des modernen Agrarmanagements, sowohl im konventionellen als auch im ökologischen Landbau. Der Fruchtwechsel sichert den Landwirten eine gewisse Flexibilität in der Vermarktung ihrer Produkte, schützt das Bodengefüge, verhindert beispielsweise Erosion und spart Kosten für Pestizide und Düngemittel. Der Fruchtwechsel wird oft als ein wichtiger Bestandteil auf dem Weg zu einer nachhaltigen und bodenschonenden Landwirtschaft gesehen.

Die Nachteile der Fruchtwechsel sind zumeist wirtschaftlich bedingt. So stellen Fruchtwechsel besondere Anforderungen an das Agrarmanagement. Es werden beispielsweise für Kartoffeln und Zuckerrüben ganz andere Maschinen und Techniken zur Lagerung benötigt als bei Getreide. Auch haben heutzutage nicht alle Betriebe Nutztiere, wodurch der damals angedachte Kreislauf aus Viehwirtschaft und Pflanzenbau nur bedingt realisiert werden kann. Eine gezielte Düngung mit tierischen Düngern (Gülle, Jauche, Stallmist) ist oft schwieriger als bei einer Verwendung von synthetischen oder mineralischen Düngern. Der Einsatz von Futterpflanzen ist damit nicht immer gewährleistet. Zwischenfruchtanbau führt zunächst zu zusätzlichen Kosten, längerfristig gesehen kann jedoch Dünger durch eine Verbesserung der Bodengesundheit eingespart werden.

Einen weiteren Aspekt stellen der Klimawandel und der damit verbundene Einfluss auf die Landwirtschaft dar. Neben der Reduzierung von durch landwirtschaftliche Prozesse verursache Treibhausgasen einerseits ist es notwendig, sich an klimatische bedingte Änderungen wie der Verlängerung von Wachstumsperioden anzupassen.

Diese mitunter divergierenden Aufgabenstellungen erschweren es einem Landwirt, grundlegende Anbaustrategien zwischen zwei Anbauzyklen zu bestimmen und kalkuliert auf ein Optimierungsziel anzupassen oder vollständig umzustellen.

Aus der US 2002/0103688 A1 sind ein Verfahren zur Bestimmung einer optimierten landwirtschaftlichen Anbaustrategie sowie ein computergestütztes landwirtschaftliches Verwaltungssystem der eingangs genannten Art bekannt. Das Verfahren basiert darauf, dass eine Bedienperson in einem ersten Schritt eine Anbaustrategie auswählt und in einem weiteren Schritt anhand von "Wenn-Dann"-Abfragen Randbedingungen, wie den Einsatz von Ressourcen, abfragt werden. Als Ergebnis liefert das Verfahren die zu erwartenden Betriebskosten der jeweils ausgewählten Anbaustrategie. Bei der US 2002/0103688 A1 muss die Bedienperson seine optimale Strategie selbst bestimmen, indem die Bedienperson mit Vorgaben für verschiedene Randbedingungen arbeitet und sich daraufhin einstellenden Resultate anschließend miteinander vergleicht. Diese Vorgehensweise ist sehr zeitaufwendig und unpräzise.

Vor diesem Hintergrund liegt der Erfindung die Aufgabe zugrunde, ein Verfahren zur Bestimmung einer optimierten landwirtschaftlichen Anbaustrategie sowie ein computergestütztes landwirtschaftliches Verwaltungssystem weiterzubilden, welches einen Landwirt bei der Erstellung und Umsetzung von Anbaustrategien vollumfänglich unterstützt.

Diese Aufgabe wird erfindungsgemäß durch ein Verfahren zur Bestimmung einer optimierten landwirtschaftlichen Anbaustrategie mit den Merkmalen des Anspruches 1 gelöst. Weiterhin wird die Aufgabe durch ein computergestütztes landwirtschaftliches Verwaltungssystem gemäß dem Anspruch 14 gelöst.

Gemäß dem Anspruch 1 wird ein Verfahren zur Bestimmung einer optimierten landwirtschaftlichen Anbaustrategie durch ein computergestütztes landwirtschaftliches Verwaltungssystem vorgeschlagen, welches durch nachfolgende Schritte gekennzeichnet ist:
- Bestimmen von Inputfaktoren durch Abfrage und/oder Auswertung von die zu bestimmende Anbaustrategie beeinflussenden Informationen, die in dem Verwaltungssystem und in von dem Verwaltungssystem unabhängigen externen Datenquellen hinterlegt sind oder an diese übermittelt werden;
- Bestimmen und Vorgeben mehrerer Optimierungsziele, die von dem Verwaltungssystem durch Auswertung der Inputfaktoren vorgegeben werden;
- Auswählen zumindest eines der vorgegebenen Optimierungsziele mittels einer Eingabe-Ausgabeeinheit;
- Optimieren einer Anbaustrategie und/oder Fruchtfolgenplanung für das zumindest eine ausgewählte Optimierungsziel unter Einbeziehung der bestimmten Inputfaktoren sowie von Ressourcenplanung und Ressourcenmanagement; und
- Ausgeben der optimierten Anbaustrategie und/oder der optimierten Fruchtfolgenplanung mittels der Eingabe-Ausgabeeinheit.

Der Erfindung liegt der Gedanke zugrunde, es einem Landwirt zu ermöglichen, mit einem verringerten Aufwand grundlegende Anbaustrategien zwischen zwei Anbauzyklen kalkuliert auf zumindest ein Optimierungsziel hin anzupassen oder vollständig umzustellen. Das erfindungsgemäße Verfahren führt und unterstützt den Landwirt bei der Durchführung des Prozesses zur Bestimmung einer optimierten landwirtschaftlichen Anbaustrategie. Bereits vorhandene Informationsressourcen, wie ein bestehendes und von dem Landwirt oder einer sonstigen Bedienperson gepflegtes Farmmanagementsystem, welches der Ressourcenplanung und dem Ressourcenmanagement dient, können dafür herangezogen werden. Dabei bilden die unterschiedlichen Inputfaktoren die Rahmenbedingungen ab, welche die zu bestimmende optimierte Anbaustrategie und/oder optimierte Fruchtfolgenplanung beeinflussen bzw. begrenzen. Unter Fruchtfolgeplanung wird die zeitliche Abfolge der auf einer landwirtschaftlichen Fläche angebauten Nutzpflanzenarten im Ablauf der Vegetationsperiode und Jahre verstanden. Die Anbaustrategie bestimmt, wie angebaut wird und welche Maßnahmen ergriffen werden, beispielsweise die Form der Bodenbearbeitung, beispielsweise das Bestellen von Maisanbauflächen mit einem Pflug oder alternativ pfluglos, das Erhöhen der Anbauintensität durch einen verstärkten Einsatz an Pflanzenschutzmitteln, die Wahl der Sorte und/oder die Aussaatstärke für eine Frucht auf einem spezifischen Feld oder die Festlegung des Zeitpunkts der Aussaat.

Insbesondere können für die ausgegebene optimierte Anbaustrategie und/oder optimierte Fruchtfolgenplanung von dem landwirtschaftlichen Verwaltungssystem Outputfaktoren bestimmt und bereitgestellt werden, welche, aufeinander abgestimmt, Art, Ort, Menge und Zeitpunkt von einzusetzenden Ressourcen beschreiben. Mit einzusetzenden Ressourcen sind alle zur Erzielung eines landwirtschaftlichen Ertrages, ob durch Pflanzenanbau und/oder Nutztierhaltung, notwendigen Maßnahmen und Ressourcen gemeint.

Insbesondere können die Inputfaktoren aus zumindest einer Datenbank als interner Datenquelle des landwirtschaftlichen Verwaltungssystems, insbesondere eines Farmmanagementsystems, abgerufen sowie anhand von aus den externen Datenquellen abrufbaren Geoinformation und/oder Umweltinformationen zu einem spezifischen Anbaugebiet, die sensorisch erfasst werden, Anbaupräferenzen, langfristigen Wetterprognosen und/oder eines auswählbaren Risikobereitschaftsfaktors bestimmt werden. Das Abrufen von Inputfaktoren aus der zumindest einen Datenbank des Verwaltungssystems hat den Vorteil, dass hierin von dem Landwirt in der Vergangenheit eingepflegte Informationen ebenso zur Verfügung stehen wie beispielsweise automatisch von Arbeitsmaschinen und/oder Anbaugeräten an das Verwaltungssystem übermittelte Prozessdaten. Daneben kann auf externe Datenquellen zugegriffen werden, die durch das Internet als Kommunikationsverbindung, insbesondere allgemeinzugänglich, sind. Zu den externen Datenquellen können die landwirtschaftlichen Arbeitsmaschinen und/oder Anbaugeräte zählen, die von dem Landwirt zum Einsatz gebracht werden. Diese können mit Einrichtungen zur Datenerhebung, Datenerfassung und/oder Datenübermittlung ausgestattet sein, die für die jeweilige landwirtschaftliche Arbeitsmaschine und/oder das jeweilige Anbaugerät aufgabenspezifisch Umgebungs-, Erntegut- und/oder Maschinenparameter bestimmen bzw. erfassen. Die Einrichtungen der landwirtschaftlichen Arbeitsmaschinen und/oder Anbaugerätekönnen zusätzlich über eine geeignete Auswertevorrichtung verfügen, welche die aufgabenspezifisch Umgebungs-, Erntegut- und/oder Maschinenparameter auswertet und aufbereitet, bevor diese an das Verwaltungssystem übertragen werden. Die Auswertung der Umgebungs-, Erntegut- und/oder Maschinenparameter kann auch der landwirtschaftlichen Arbeitsmaschine und/oder dem Anbaugerät nachgelagert durch eine zur Auswertung eingerichtete Datenverarbeitungsvorrichtung durchgeführt werden. Die Datenverarbeitungsvorrichtung kann die Informationen an das landwirtschaftliche Verwaltungssystem übertragen, um diese in der zumindest einen Datenbank des Verwaltungssystems zu hinterlegen. Insbesondere kann die Datenverarbeitungsvorrichtung als das Verwaltungssystem ausgeführt sein. Die aus den internen und externen Datenquellen abrufbaren Geoinformation und/oder Umweltinformationen zu einem spezifischen Anbaugebiet können hinsichtlich der Fruchtfolgenplanung relevant sein, um bestimmen zu können, welche Fruchtfolge auf welchem Feld/Schlag mit dem zumindest einen Optimierungsziel am besten korrespondiert.

Bevorzugt kann als Optimierungsziel zumindest eines aus der Gruppe Ertragsmaximierung, ressourcenschonende Bearbeitung, Umweltverträglichkeit, liquiditätsschonende Bearbeitung, geringster Aufwand, Gewinnoptimierung oder umsatzstärkste Fruchtfolge ausgewählt werden. Das Optimierungsziel geringster Aufwand kann feiner untergliedert sein und als zu optimierende Größe beispielsweise die von dem Landwirt selbst aufzuwendende Arbeitszeit und/oder den Einsatz von Fremdarbeitskräften zum Gegenstand haben. Ebenso kann das Einsatzmanagement von landwirtschaftlichen Arbeitsmaschine dazu zählen. Das Optimierungsziel Umweltverträglichkeit kann beispielsweise auf rein biologischen Anbau des Erntegutes und/oder emissionsneutrale Anbaupraktiken abstellen. Insbesondere können mehrere Optimierungsziele ausgewählt werden, die der Optimierung der Anbaustrategie oder der Fruchtfolgenplanung zugrunde gelegt werden. Das Optimierungsziel Gewinnoptimierung kann sich an einer Minimierung der Kosten und/oder einer Auswahl einer besonders profitablen Anbaustrategie und/oder Fruchtfolgenplanung orientieren.

Gemäß einer Weiterbildung kann bei einer Auswahl mehrerer Optimierungsziele eine durch einen veränderbaren Gewichtungsparameter einstellbare Gewichtung vorgenommen werden. Somit kann eine individuelle Mischstrategie vorgegeben werden, deren Umsetzbarkeit mittels der Inputfaktoren bewertet werden kann. Diskrepanzen bei der Durchführung der Optimierung zur Erstellung einer optimierten Anbaustrategie und/oder einer optimierten Fruchtfolgenplanung, die aus gegensätzlichen Optimierungszielen resultieren und/oder wegen der eingestellten Gewichtung auftreten können, können aufgezeigt werden. Weiter bevorzugt können geeignete Hinweise ausgegeben und/oder Maßnahmen aufgezeigt werden, durch welche sich diese Diskrepanzen zumindest reduzieren lassen.

Weiter bevorzugt kann eine kontinuierliche Aktualisierung und Anpassung von wenigstens einem Inputfaktor durchgeführt werden. Die Häufigkeit der Durchführung einer Aktualisierung und Anpassung von wenigstens einem Inputfaktor ist von der Art des jeweiligen Inputfaktors abhängig. Es kann ein Zyklus, der durch auf mehreren Feldern angebaute Kulturen und/oder auf einem Feld vorgesehene Fruchtfolge vorgegeben wird, verwendet werden, um zeitliche Abstände für die kontinuierliche Aktualisierung und Anpassung von wenigstens einem Inputfaktor vorzugeben.

Hierbei kann eine Aktualisierung des wenigstens einen Inputfaktors durch eine Übertragung und Auswertung von mittels der Einrichtung zur Datenerhebung sensorisch erfassten Arbeitsdaten zumindest einer mit dem Verwaltungssystem kommunizierenden Arbeitsmaschine und/oder Anbaugerätes während oder nach der jeweiligen Durchführung eines landwirtschaftlichen Arbeitsvorganges durchgeführt werden. Die Arbeitsdaten umfassen Umgebungs-, Erntegut- und/oder Maschinenparameter, die von der landwirtschaftlichen Arbeitsmaschine während der jeweiligen Durchführung eines landwirtschaftlichen Arbeitsvorganges erfasst werden. Lagern, Silos und/oder sonstigen Arbeits- und Nutzflächen auf einer Hofstätte eines Betriebes können ebenfalls Einrichtung zur Datenerhebung zugeordnet bzw. an diesen angeordnet sein.

Insbesondere kann ein detaillierter Ablaufplan für die Durchführung der optimierten Anbaustrategie und/oder der optimierten Fruchtfolgenplanung durch das Verwaltungssystem erstellt und ausgegeben werden.

Dabei kann der bestimmte Ablaufplan in dem landwirtschaftlichen Verwaltungssystem abrufbar hinterlegt werden.

Weiterhin kann der bestimmte Ablaufplan für zumindest einen erntegutspezifischen Zeitraum erstellt werden. Ein erntegutspezifischer Zeitraum kann eine einzelne Saison für ein spezielles Erntegut sein. Ein erntegutspezifischer Zeitraum kann auch eine Mehrjahresplanung sein.

Des Weiteren kann der bestimmte Ablaufplan durch das Verwaltungssystem fortlaufend aktualisiert werden. Dies kann anhand von fortlaufender Dokumentation in dem Verwaltungssystem und/oder der regelmäßigen Abfrage externer Datenquellen erfolgen. Auf diese Weise können fortlaufend der Optimierungsprozess und/oder die Optimierungsstrategie aktualisiert und erforderlichenfalls ein oder mehrere an geänderte Rahmenbedingungen angepasste Vorschläge bereitgestellt werden. Der Landwirt kann anhand solcher Vorschläge entscheiden, ob er die ausgewählte Anbaustrategie unverändert fortführt oder gemäß einem Vorschlag anpasst. So kann im laufenden Erntejahr als eine Anpassung der ausgewählten Anbaustrategie beispielsweise eine zusätzliche Pflanzenschutzmaßnahme vorgeschlagen werden, über die der Landwirt entscheiden kann. Denkbar ist auch ein Sortenwechsel innerhalb der Fruchtfolgenplanung als eine Anpassung der ausgewählten Anbaustrategie.

Bevorzugt können in Abhängigkeit von der Gewichtung autonom die Inputfaktoren durch das Verwaltungssystem bestimmt werden, welche einer fortlaufenden Aktualisierung bedürfen, d.h. für welche die Durchführung einer fortlaufenden Aktualisierung notwendig wird. Ebenfalls Einfluss auf die Aktualisierung hat die zeitliche Vorgabe für den bestimmten Ablaufplan. Dabei kann bei einer Mehrjahresplanung betriebswirtschaftliche Einflüsse, wie Preisentwicklungen, Kontrakte für Betriebsressourcen, spezifische vertragliche Vereinbarungen mit Abnehmern von Erntegut, oder geänderte gesetzliche Regelungen als Inputfaktoren einen höheren Stellenwert bei der Beurteilung der Aktualisierungsnotwendigkeit zukommen, als bei einer kurzfristigen Planung über nur eine Anbausaison hinweg.

Gemäß einer Weiterbildung können mehrere unterschiedliche Standard-Anbaustrategien oder Standard-Fruchtfolgenplanungen in dem Verwaltungssystem hinterlegt werden, die als Grundlage für das Optimieren einer Anbaustrategie und/oder Fruchtfolgenplanung verwendet werden. Diese Standard-Anbaustrategien oder Standard-Fruchtfolgenplanungen können somit im Sinne eines Templates verwendet werden, welches der Landwirt als Ausgangspunkt auswählen kann. Bei der Ausführung des Verfahrens kann durch das Bestimmen der Inputfaktoren dieses Template angepasst oder verworfen werden.

Nach einer weiteren Lehre gemäß dem Anspruch 14, welcher eine eigenständige Bedeutung zukommt, wird ein computergestütztes landwirtschaftliches Verwaltungssystem zur Verwendung in einem vorschlagsgemäßen Verfahren beansprucht. Auf alle Ausführungen, die geeignet sind, das Verwaltungssystem als solches oder seine Verwendung zu beschreiben, darf verwiesen werden.

Die vorliegende Erfindung wird nachstehend anhand eines in den Zeichnungen dargestellten Ausführungsbeispieles näher erläutert.

Es zeigen:
- Fig. 1: schematisch eine Übersicht eines durch ein landwirtschaftliches Verwaltungssystem zu verwaltenden landwirtschaftlichen Betriebes;
- Fig. 2: schematisch eine abstrahierte Darstellung des Verwaltungssystems;
- Fig. 3: schematisch einen prinzipiellen Ablauf zur Erstellung einer Anbaustrategie oder einer Fruchtfolgenplanung gemäß dem Stand der Technik; und
- Fig. 4: exemplarisch und schematisch einen erfindungsgemäßen Ablauf zur Erstellung einer optimierten Anbaustrategie und/oder einer optimierten Fruchtfolgenplanung.

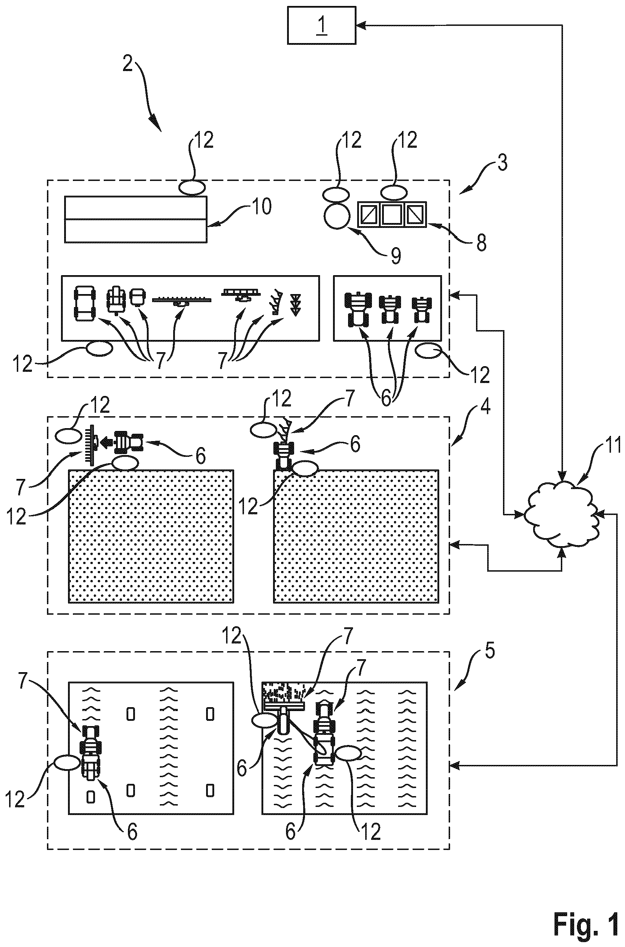

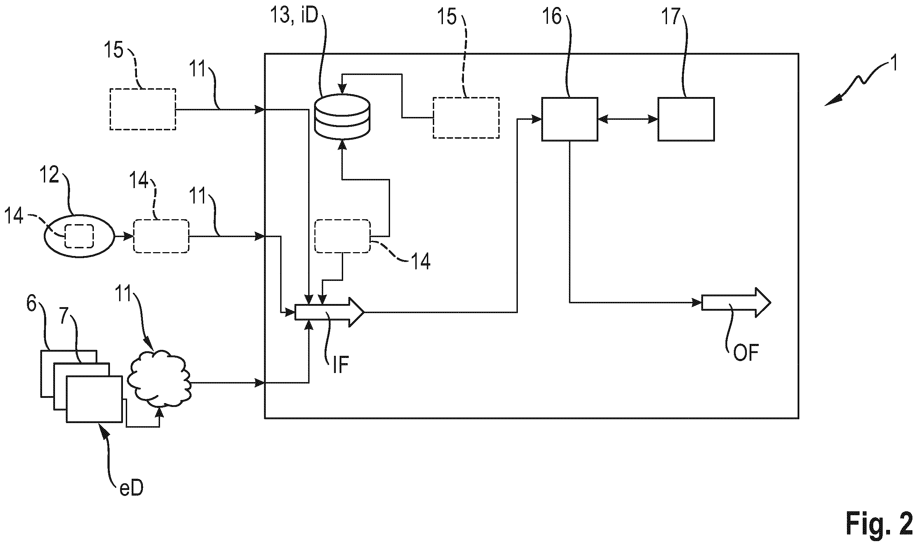

Die Darstellung in Fig. 1 zeigt schematisch eine Übersicht eines durch ein landwirtschaftliches Verwaltungssystem 1 zu verwaltenden landwirtschaftlichen Betriebes 2. In Fig. 2 ist schematisch eine abstrahierte Darstellung des Verwaltungssystems 1 gezeigt.

Der Begriff "Betrieb" ist weit gefasst zu verstehen und umfasst unter anderem neben der Hofstätte 3 ein oder mehrere zu bearbeitende Felder 4, 5, landwirtschaftliche Arbeitsmaschinen 6 sowie Anbaugeräte 7. Weiterhin können beispielsweise verschiedene Lager 8, Silos 9 sowie sonstige Arbeits- und Nutzflächen 10, wie Werkstätten und/oder beispielsweise im Fall von viehwirtschaftlicher Nutzung Stallungen, auf der Hofstätte 3 umfasst sein. Landwirtschaftliche Arbeitsmaschinen 6 umfassen beispielsweise alle für das Betreiben des landwirtschaftlichen Betriebes 2 notwendigen Erntemaschinen, wie Mähdrescher, Feldhäcksler, Kartoffel oder Rübenroder oder dergleichen, sowie Zugfahrzeuge, beispielsweise Traktoren, oder Ladefahrzeuge, wie Teleskoplader. Der Begriff Anbaugeräte 7 umfasst beispielsweise Vorsatzgeräte für die Arbeitsmaschinen 6, von einer Arbeitsmaschine 6 gezogene Transport- oder Ladewagen, gezogene Erntemaschinen, wie eine Ballenpresse, sowie Bodenbearbeitungsgeräte, Schwader, Wender, Mähwerke, Pflanzenschutzspritze oder Düngerstreuer. Die vorstehenden Auflistungen sind nicht abschließend zu verstehen.

Das landwirtschaftliche Verwaltungssystem 1 steht durch eine Kommunikationsverbindung 11 mit unterschiedlichen Einrichtungen 12 zur Datenerhebung, Datenerfassung und/oder Datenübermittlung in Verbindung, welche den landwirtschaftliche Arbeitsmaschinen 6 sowie den Anbaugeräten 7, den Lagern 8, Silos 9 und/oder den sonstigen Arbeits- und Nutzflächen 10 auf der Hofstätte 3 zugeordnet bzw. an diesen angeordnet sind. Die Einrichtungen 12 übermitteln Informationen an das Verwaltungssystem 1, welche in zumindest einer Datenbank 13 des Verwaltungssystems 1 als Inputfaktoren IF hinterlegt werden. Die von den Einrichtungen 12 übermittelten Informationen sind unter anderem Bestandteil von Ressourcenplanung und Ressourcenmanagement, welche durch das landwirtschaftliches Verwaltungssystem 1 durchgeführt werden. Die zumindest eine Datenbank 13 bildet eine interne Datenquelle iD. Die Kommunikationsverbindung 11 kann drahtlose sowie drahtgebundene Kommunikationsmedien umfassen.

Die Einrichtungen 12 zur Datenerhebung, die den landwirtschaftliche Arbeitsmaschinen 6 sowie den Anbaugeräten 7 zugeordnet bzw. an diesen angeordnet sind, bilden externe Datenquellen eD des Verwaltungssystems 1. Die Einrichtungen 12 zur Datenerhebung sind dazu eingerichtet, für die jeweilige landwirtschaftliche Arbeitsmaschine 6 und/oder das jeweilige Anbaugerät 7 aufgabenspezifisch Umgebungs-, Erntegut- und/oder Maschinenparameter sensorisch zu bestimmen bzw. zu erfassen. Durch die Einrichtungen 12 können Arbeitsabläufe der Arbeitsmaschinen 6 sowie der Anbaugeräte 7 zur Vorbereitung und während der Durchführung eines jeweiligen landwirtschaftlichen Arbeitsvorganges erfasst bzw. bestimmt werden. Hierzu werden Umgebungs-, Erntegut- und/oder Maschinenparameter von der jeweiligen Einrichtung 12 sensorisch erfasst und von einer Auswertevorrichtung 14 ausgewertet. Die Auswertevorrichtung 14 kann Teil der Einrichtung 12 der Arbeitsmaschine 6 und/oder des Anbaugerätes 7 sein. Die Auswertevorrichtung 14 kann zusätzlich oder alternativ als eine Datenverarbeitungsvorrichtung der Arbeitsmaschine 6 und/oder des Anbaugerätes 7 ausgeführt sein. Ebenfalls denkbar ist, dass die Auswertevorrichtung 14 Teil des landwirtschaftlichen Verwaltungssystems 1 ist, durch welche einen nachgelagerte, insbesondere zeitliche versetzte, Auswertung durchgeführt wird.

Die jeweilige Einrichtung 12 erfasst bzw. bestimmt die für die jeweilige landwirtschaftliche Arbeitsmaschine 6 und/oder das jeweilige Anbaugerät 7 aufgabenspezifisch Umgebungs-, Erntegut- und/oder Maschinenparameter, welche unter anderem Inputfaktoren IF des Verfahrens darstellen.

Die von den Einrichtungen 12 erfassten Maschinenparameter umfassen beispielsweise Betriebsdaten wie den Einsatz von Betriebs- und Hilfsstoffen, Ertragsdaten, Positionsdaten, Zeitdaten und dergleichen mehr. Erntegutparameter umfassen spezifische Daten des Erntegutes während eines Bearbeitungs- oder Verarbeitungsvorganges. Umgebungsparameter können Witterungsdaten während eines Bearbeitungs- oder Verarbeitungsvorganges umfassen. Umgebungsparameter können auch anhand der Positionsdaten bestimmte Geoinformationen sein, die von externen Datenquellen bereitgestellt werden können. In Zusammenschau der aufgabenspezifisch Umgebungs-, Erntegut- und/oder Maschinenparameter ermöglichen diese eine, insbesondere fortlaufende und zusammenhängende, Dokumentation über den Einsatz der Arbeitsmaschine 6 und/oder des Anbaugerätes 7 und das damit verbundene Arbeitsergebnis über einen definierten Beurteilungszeitraum hinweg. Der definierte Beurteilungszeitraum kann ein mehrstündiger oder mehrtätiger Arbeitseinsatz, eine mehrmonatige Anbauperiode bis hin zu einem mehrjährigen Zeitraum sein.

Mittels der den Lagern 8, Silos 9 und/oder den sonstigen Arbeits- und Nutzflächen 10 auf der Hofstätte 3 zugeordneten bzw. dort angeordneten Einrichtungen 12 lassen sich weitere Parameter als Inputfaktoren IF erfassen oder bestimmen, welche Einfluss auf die Ressourcenplanung und/oder das Ressourcenmanagement haben. Hierzu zählen beispielsweise Lagerbestände in den Lagern 8 oder Vorräte im Silo 9, die von den Einrichtungen 12, insbesondere sensorisch, erfasst und überwacht werden können. Aufgrund der im Allgemeinen räumlichen Nähe von Lagern 8, Silos 9 und/oder den sonstigen Arbeits- und Nutzflächen 10 zur Hofstätte 3 und der uneingeschränkten Zugänglichkeit durch zumindest den Landwirt, können diese als interne Datenquellen iD angesehen werden.

Weiterhin steht das Verwaltungssystem 1 mit zumindest einer Eingabe-Ausgabe-Vorrichtung 15 durch die Kommunikationsverbindung 11 in Verbindung. Die zumindest eine Eingabe-Ausgabe-Vorrichtung 15 kann auf einer Arbeitsmaschine 6 angeordnet sein. Die zumindest einer Eingabe-Ausgabe-Vorrichtung 15 kann Bestandteil einer mobilen Datenverarbeitungsvorrichtung wie eines Mobilfunktelefons, eines Tablets oder dergleichen sein. Zusätzlich oder alternativ kann das Verwaltungssystem 1 zumindest eine Eingabe-Ausgabe-Vorrichtung 15 umfassen. Mittels der zumindest einen Eingabe-Ausgabe-Vorrichtung 15 werden in einem Dialog mit einem Landwirt oder einer sonstigen Bedienperson Informationen abgefragt und/oder eingegeben, die der Dokumentation dienen. Die Art der Informationen wird weiter unten näher spezifiziert. Das Verwaltungssystem 1 umfasst zumindest eine Recheneinheit 16 sowie zumindest eine Speichereinheit 17, in welcher Algorithmen hinterlegt sind, die von der Recheneinheit 16 zur Be- und Verarbeitung von Daten ausgeführt werden können. Das Ergebnis der Be- und Verarbeitung der Daten, eine optimierte Anbaustrategie und/oder Fruchtfolgenplanung, wird als Ausgabe OF an die jeweilige Eingabe-Ausgabe-Vorrichtung 15 übertragen und dem Landwirt angezeigt.

Neben der Eingabe mittels der zumindest einen Eingabe-Ausgabe-Vorrichtung 15 kann auf weitere externe Datenquellen eD zugegriffen werden, die durch das Internet als Kommunikationsverbindung 11 insbesondere allgemeinzugänglich sind. Auf diese Weise lassen sich beispielsweise aktuelle Wetterdaten sowie langfristigen Wetterprognosen, Geoinformation und/oder Umweltinformationen zu einem spezifischen Anbaugebiet abrufen. Die externen Datenquellen eD können des Weiteren beispielsweise Informationen über gesetzliche Bestimmungen, Beschaffungspreise, beispielsweise von Betriebs- und Hilfsstoffen sowie Saatgut, Verkaufspreise von Erntegut und dergleichen mehr umfassen und bilden ebenfalls Inputfaktoren IF.

Die durch Abfrage und/oder Auswertung von die zu bestimmende Anbaustrategie und/oder Fruchtfolgenplanung beeinflussenden generierten Informationen, die in der zumindest einen Datenbank 13 des landwirtschaftlichen Verwaltungssystems 1 und in von dem Verwaltungssystem 1 unabhängigen externen Datenquellen eD abrufbar hinterlegt sind und/oder an diese übermittelt werden, bilden weitere Inputfaktoren IF des erfindungsgemäßen Verfahrens.

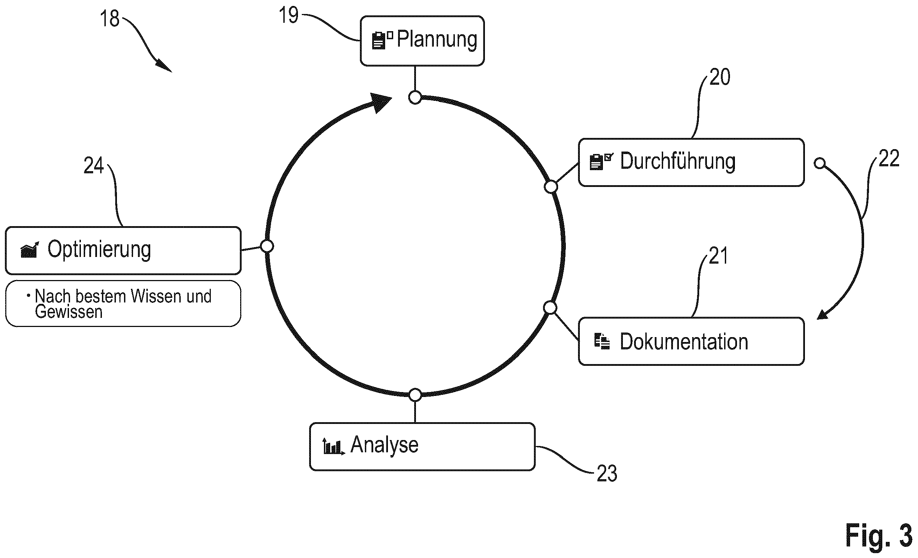

In Fig. 3 ist schematisch ein prinzipieller Ablauf zur Erstellung einer Anbaustrategie und/oder einer Fruchtfolgenplanung gemäß dem Stand der Technik dargestellt. Der Ablauf wird als ein fortlaufender Planungskreislauf 18 ausgeführt, welcher mit einem Planungsschritt 19 für zumindest eine anzubauende Furchtart beginnt. Im Anschluss folgt zumindest ein Ausführungsschritt 20, welcher die Durchführung in einer bestimmten Abfolge auszuführender verschiedener Arbeitsschritte, die für die Vorbereitung, den Anbau und die Ernte der Fruchtart erforderlich sind, umfasst. Im Anschluss erfolgt jeweils zumindest ein mit dem zumindest einen Ausführungsschritt 20 einhergehender Dokumentationsschritt 21. Die Durchführung des zumindest einen Dokumentationsschrittes 21 kann als zumindest teilautomatisierter Prozessschritt 22 erfolgen. Anhand des jeweiligen Dokumentationsschrittes 21 erfolgt ein Analyseschritt 23 des zumindest einen Ausführungsschrittes 20. Der Analyseschritt 23 bildet die Grundlage eines Optimierungsschrittes 24, in welchem der Landwirt selbsttätig darüber entscheidet, an welcher Stelle der eingangs vorgegebenen Fruchtfolgenplanung Änderungen erforderlich sein können, um eine Verbesserung beispielsweise des Ertrags oder der Nutzung von Ressourcen zu erreichen, welche sich im nachfolgenden Planungsschritt 19 niederschlagen. Dabei stehen Landwirte unter wirtschaftlichem Erfolgsdruck und sind, in der Regel auf sich allein gestellt, selten in der Lage, grundlegende Anbaustrategien zwischen zwei Anbauzyklen kalkuliert auf ein Optimierungsziel hin anzupassen oder vollständig umzustellen.

Insbesondere die Fülle an zu verarbeitenden Informationen, die bereits bei einer geringen Anzahl an zu bearbeitenden Feldern 4, 5, einzusetzenden Ressourcen und dergleichen mehr entsteht und die sich auch während eines Anbauzyklus, beispielsweise durch äußere Einflüsse, ändern können, stellen den Landwirt hierbei vor hohe Hürden.

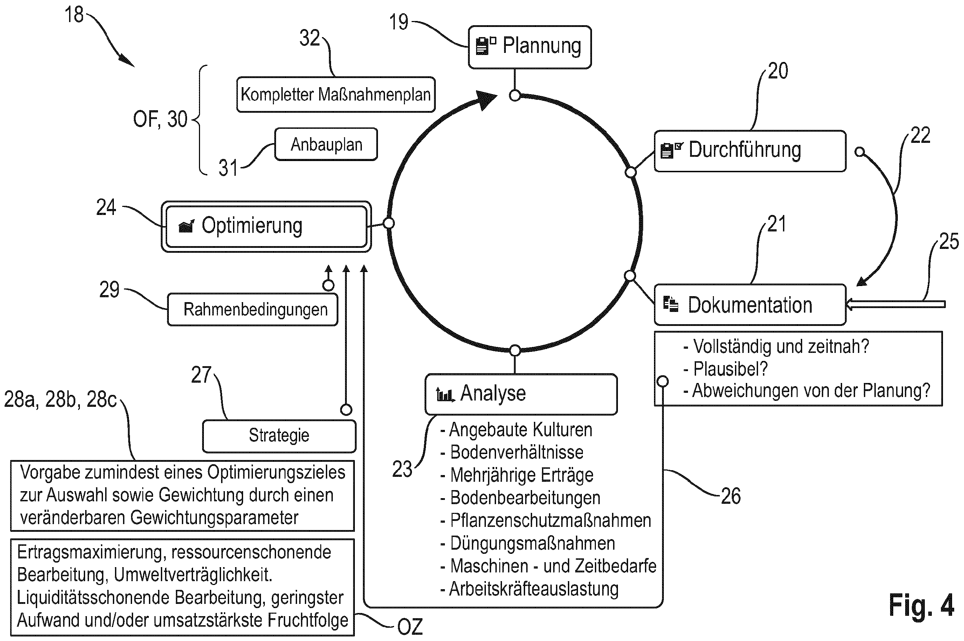

In Fig. 4 ist exemplarisch und schematisch ein erfindungsgemäßer Ablauf zur Erstellung einer optimierten Anbaustrategie und/oder einer optimierten Fruchtfolgenplanung dargestellt, der auf dem vorstehend beschriebenen Planungskreislauf 18 basiert.

Im Zuge der Durchführung des zumindest einen Dokumentationsschrittes 21 nach der Durchführung zumindest eines Ausführungsschrittes 20 kann bei der Ausführung des erfindungsgemäßen Verfahrens geprüft werden, ob die insbesondere von dem teilautomatisierten Prozessschritt 22 nicht umfasste Dokumentation, d.h. die jeweilige in einem manuellen Prozessschritt 25 durchzuführende Dokumentation durch den Landwirt oder die Bedienperson vollständig und zeitnah erfolgt ist. Dabei können bei der Ausführung des zumindest einen Dokumentationsschrittes 21 Plausibilitätsprüfungen vorgesehen sein, um die Korrektheit der, insbesondere im manuellen Prozessschritt 25 durchgeführten Dokumentation, zu prüfen. Dadurch können beispielsweise fehlerhafte Zuordnungen von Inputfaktoren IF während der Ausführung eines Dokumentationsschrittes 21 oder nach einem Dokumentationsschritt 21 ermittelt und aufgezeigt werden. Beispielsweise können von den Arbeitsmaschinen 6 und /oder den Anbaugeräten 7 bereitgestellte Inputfaktoren IF, die im manuellen Prozessschritt 25 eingepflegt werden, irrtümlich dem Feld 5 zugeordnet werden, obwohl die Arbeitsmaschinen 6 und /oder die Anbaugeräte 7 gemäß einer Ressourcenplanung im vorherigen Planungsschritt 19 auf dem Feld 4 im Einsatz waren.

Die Durchführung des Dokumentationsschrittes 21 umfasst auch die Überprüfung der Inputfaktoren IF hinsichtlich ihrer Vollständigkeit, zeitlichen Nähe und Plausibilität, die durch den teilautomatisierten Prozessschritt 22 erfasst werden.

Des Weiteren wird im Dokumentationsschritt 21 geprüft, ob es zu Planungsabweichungen 26 von der im vorherigen Planungsschritt 19 festgelegten Planung gekommen ist.

Das Ergebnis dieser Auswertung, eine festgestellte Planungsabweichung 26 wird in dem zu einem späteren Zeitpunkt auszuführenden Optimierungsschritt 24 berücksichtigt.

An den Dokumentationsschritt 21 schließt sich der Analyseschritt 23 an. In dem Analyseschritt 23 werden im Dokumentationsschritt 21 eingegebene, empfangene oder auf sonstige Weise übermittelte und zusammengeführte Inputfaktoren IF ausgewertet. In dem Analyseschritt 23 werden unter anderem angebaute Kulturen, Fruchtfolgen, bestehende Bodenverhältnisse, Ertragsübersichten der verschiedenen Felder 4, 5, durchgeführte Bodenbearbeitungsmaßnahmen, durchgeführte Pflanzenschutzmaßnahmen, durchgeführte Düngemaßnahmen, tatsächliche Ressourcennutzung, wie Maschinen- und Zeitbedarfe sowie Arbeitskräfteauslastung, als Inputfaktoren IF herangezogen, die dem nachfolgenden Optimierungsschritt 24 als Basis dienen.

Der nachfolgende Optimierungsschritt 24 umfasst mehrere Teilschritte, Bestimmung einer Strategie 27 sowie von Rahmenbedingungen 29, die für das Ermitteln eines Ablaufplanes 30 von dem Verwaltungssystem 1 unter Berücksichtigung der Auswertung der Inputfaktoren IF auszuführen sind, um eine optimierte Anbaustrategie und/oder Fruchtfolgenplanung als Ausgabe OF bereitzustellen. Der Ablaufplan 30 umfasst einen Anbauplan 31 sowie einen vollständigen Maßnahmenplan 32.

Im Teilschritt Strategie 27 werden als Verfahrensschritte Vorgabe 28a, Auswahl 28b und Gewichtung 28c von zumindest einem Optimierungsziel OZ durchgeführt. Bevorzugt kann als Optimierungsziel OZ zumindest eines aus der Gruppe Ertragsmaximierung, ressourcenschonende Bearbeitung, Umweltverträglichkeit, liquiditätsschonende Bearbeitung, geringster Aufwand, Gewinnoptimierung oder umsatzstärkste Fruchtfolge im Verfahrensschritt Vorgabe 28a dem Landwirt durch die Eingabe-Ausgabe-Vorrichtung 15 angezeigt und im Verfahrensschritt Auswahl 28b ausgewählt werden. Die Durchführung des Teilschritts Strategie 27 und der zugehörigen Verfahrensschritte Vorgabe 28a, Auswahl 28b und Gewichtung 28c kann bevorzugt dialogbasierend erfolgen.

Das Optimierungsziel OZ "geringster Aufwand" kann feiner untergliedert sein und als zu optimierende Größe beispielsweise die von dem Landwirt selbst aufzuwendende Arbeitszeit und/oder den Einsatz von Fremdarbeitskräften zum Gegenstand haben. Ebenso kann das Einsatzmanagement von landwirtschaftlichen Arbeitsmaschine zum Optimierungsziel OZ "geringster Aufwand" zählen. Ein weiteres Optimierungsziel OZ kann "Umweltverträglichkeit" sein, wobei das Optimierungsziel OZ beispielsweise auf rein biologischen Anbau des Erntegutes und/oder emissionsneutrale Anbaupraktiken abstellen kann. Insbesondere können mehrere Optimierungsziele OZ ausgewählt werden, die der Optimierung der Anbaustrategie oder der Fruchtfolgenplanung zugrunde gelegt werden. Die Auswahl zumindest eines Optimierungsziele OZ bildet einen weiteren Inputfaktor IF, der in den Optimierungsvorgang im Optimierungsschritt 24 einfließt.

Das Auswählen im Verfahrensschritt Auswahl 28b zumindest eines der vorgegebenen Optimierungsziele OZ erfolgt mittels der Eingabe-Ausgabeeinheit 15.

Im Verfahrensschritt Gewichtung 28c kann bei einer Auswahl mehrerer Optimierungsziele OZ eine durch einen veränderbaren Gewichtungsparameter einstellbare Gewichtung der verschiedenen Optimierungsziele OZ vorgenommen werden. Mit der Gewichtung wird der Einfluss des jeweiligen Optimierungsziels OZ auf die zu optimierte Anbaustrategie und/oder Fruchtfolgenplanung vorgegeben, den diese nach der Vorstellung des Landwirts haben sollen. Somit kann eine individuelle Mischstrategie vorgegeben werden, deren Umsetzbarkeit mittels der weiteren Inputfaktoren IF im Optimierungsschritt 24 bewertet werden kann. Diskrepanzen bei der Durchführung der Optimierung zur Erstellung einer optimierten Anbaustrategie und/oder einer optimierten Fruchtfolgenplanung, die aus gegensätzlichen Optimierungszielen OZ resultieren und/oder wegen der eingestellten Gewichtung auftreten können, können aufgezeigt werden. Weiter bevorzugt können geeignete Hinweise gegeben und/oder Maßnahmen aufgezeigt werden, durch welche sich diese Diskrepanzen zumindest reduzieren lassen.

Im Teilschritt Rahmenbedingungen 29 werden Einflüsse als Inputfaktoren IF ermittelt oder bestimmt, die im Wesentlichen fremdbestimmt sind. Hierzu zählen beispielsweise betriebswirtschaftliche Einflüsse, wie Preisentwicklungen, Kontrakte für Betriebsressourcen, spezifische vertragliche Vereinbarungen mit Abnehmern von Erntegut, Verfügbarkeit von Arbeitsmaschinen 6 und/oder Anbaugeräten 7 von Dritten wie Lohnunternehmern, oder geänderte gesetzliche Regelungen als Inputfaktoren IF. Weitere im Teilschritt Rahmenbedingungen 29 ermittelte oder bestimmte Inputfaktoren IF können beispielsweise das Klima als langfristiger Inputfaktor IF und das Wetter als kurzfristiger Inputfaktor IF, Ressourcenangebote, Futterbedarfe, geografisch für den Anbau geeignete und/oder empfohlene Kulturen sein. Weitere im Teilschritt Rahmenbedingung 29 zu bestimmende Inputfaktoren IF können Risikobereitschaft und/oder bestehende Anbaupräferenzen des Landwirtes sein. Die Durchführung des Teilschritts Rahmenbedingungen 29 kann bevorzugt zumindest in Teilen dialogbasierend erfolgen.

Im Ergebnis werden ein einen Anbauplan 31 sowie einen vollständigen Maßnahmenplan 32 umfassender Ablaufplan 30 für die durch das Verfahren bestimmte optimierte Anbaustrategie und/oder die optimierte Fruchtfolgenplanung von dem Verwaltungssystem 1 als Outputfaktoren OF bestimmt und bereitgestellt, welche, aufeinander abgestimmt, Art, Ort, Menge und Zeitpunkt von einzusetzenden Ressourcen beschreiben.

Der ausgegebene Ablaufplan 30 dient zur Umsetzung der anhand der verfügbaren Inputfaktoren IF bestimmten optimierten Anbaustrategie und/oder der optimierten Fruchtfolgenplanung nach der Ausführung des Optimierungsschrittes 24. Dem Landwirt wird durch das erfindungsgemäß Verfahren die optimierte Anbaustrategie und/oder die optimierte Fruchtfolgenplanung bereitgestellt, die unter Berücksichtigung seiner im Teilschritt Strategie 27 gemachten Vorgaben am nächsten kommen. Alle für das Bestimmen der optimierten Anbaustrategie und/oder der optimierten Fruchtfolgenplanung notwendigen Schritte zur Bestimmung, Auswertung und Vergleich von Inputfaktoren IF werden durch das erfindungsgemäße Verfahren abgebildet. Im Unterschied zum eingangs genannten Stand der Technik bedarf es somit nicht eines Vergleiches von verschiedenen ermittelten Anbaustrategie, die auf der vom Landwirt zu treffenden Vorgaben für Randbedingungen im Sinne von Inputfaktoren beruhen.

Der Anbauplan 31 sowie der vollständige Maßnahmenplan 32 bilden die Basis des sich wieder anschließenden Planungsschrittes 19 für die Umsetzung der optimierten Anbaustrategie und/oder der optimierten Fruchtfolgenplanung. Innerhalb dieses andauernden Planungskreislaufes 18 bilden beispielsweise die Auswahl einer Kultur, die Verfügbarkeit von betriebsinternen Ressourcen wie verfügbarer Arbeitskraft, Arbeitsmaschinen 6 und Anbaugeräten 7, grundsätzlich Fixpunkte. Diese Fixpunkte, die zugleich Inputfaktoren IF sind, können durch eine entsprechende Einflussnahme geändert werden, was wiederum zu einer Anpassung der innerhalb eines vorherigen Zyklus bestimmten optimierten Anbaustrategie und/oder der optimierten Fruchtfolgenplanung führt.

Dem Planungskreislauf 18 ist eine Durchführung einer kontinuierlichen Aktualisierung und Anpassung von wenigstens einem Inputfaktor immanent. Die Häufigkeit der Durchführung einer Aktualisierung und Anpassung von wenigstens einem Inputfaktor ist von der Art des jeweiligen Inputfaktors IF abhängig. Ein Zyklus, der durch auf mehreren Feldern angebaute Kulturen und/oder eine auf einem Feld vorgesehene Fruchtfolge vorgegeben wird, kann verwendet werden, um zeitliche Abstände für die kontinuierliche Aktualisierung und Anpassung von wenigstens einem Inputfaktor IF vorzugeben. Eine kontinuierliche Anpassung eines Teils der Inputfaktoren IF ergibt sich durch die zumindest teilautomatisierte Dokumentation im Prozessschritt 22 sowie die Ausführung eines manuellen Prozessschrittes 25 im Zuge des Dokumentationsschrittes 21.

Im Teilschritt Rahmenbedingungen 29 ermittelte bzw. bestimmte Inputfaktoren IF lassen sich zumindest teilweise durch automatisierte Abfragen aktualisieren. Spezifische, durch Entscheidungen des Landwirts beeinflusste Inputfaktoren IF wie beispielsweise Vertragspflichten zur Erfüllung von Anbaustandards und/oder Haltungsstandards, die im Teilschritt Rahmenbedingungen 29 ermittelt bzw. bestimmt werden, bedürfen hingegen bei einer Umstellung von einem Standard auf einen anderen Standard, beispielsweise von konventionellem Anbau auf biologischen Anbau, einer manuellen Aktualisierung. Die mit einem geänderten Standard verbundenen Auflagen lassen sich wiederum zumindest teilweise aus externen Datenquellen eD zur Aktualisierung abrufen. Somit stehen diese dem Optimierungsschritt 24 für eine entsprechende Berücksichtigung zur Verfügung.

Gemäß einem weiteren Aspekt können in Abhängigkeit von der im Unterschritt Gewichtung 28c vorgenommenen Gewichtung von ausgewählten Optimierungsstrategien OZ autonom die Inputfaktoren IF bestimmt werden, welche einer fortlaufenden Aktualisierung bedürfen.

Es können mehrere unterschiedliche Standard-Anbaustrategien oder Standard-Fruchtfolgenplanungen in dem Verwaltungssystem 1 hinterlegt werden, die als Grundlage für das erstmalige Erstellen oder eine spätere Anpassung einer optimierten Anbaustrategie und/oder Fruchtfolgenplanung verwendet werden. Diese Standard-Anbaustrategien oder Standard-Fruchtfolgenplanungen können somit im Sinne eines Templates verwendet werden, welches der Landwirt als Ausgangspunkt auswählen kann. Bei der Ausführung des Verfahrens kann durch das kontinuierliche Bestimmen und Aktualisieren der Inputfaktoren IF dieses Template angepasst oder verworfen werden.

Der bestimmte Ablaufplan 30 kann in der Speichereinheit 17 des Verwaltungssystems 1 hinterlegt werden. Denkbar ist auch eine cloudbasierte Lösung zumindest zur Speicherung des Ablaufplanes 30. Grundsätzlich ist es aber auch denkbar, die Recheneinheit 16 und/oder die Speichereinheit 17 in einer externen Datenverarbeitungsanlage außerhalb der Hofstätte 3, beispielsweise in einem externen Rechnernetzwerk (Cloud) vorzusehen. In letzterem Fall erfolgt dann die Anwendung des Algorithmus und/oder die Speicherung der besagten Daten insbesondere cloudbasiert. Insbesondere kann das Verwaltungssystem 1 cloudbasiert ausgeführt sein.

Der bestimmte Ablaufplan 30 wird für zumindest einen erntegutspezifischen Zeitraum erstellt. Ein erntegutspezifischer Zeitraum kann eine einzelne Saison für ein spezielles Erntegut sein. Ein erntegutspezifischer Zeitraum kann auch eine Mehrjahresplanung sein. Innerhalb diese erntegutspezifischen Zeiträume lassen sich Anpassungen durchführen, welche auf aktualisierte Inputfaktoren IF und/oder zwischenzeitliche Änderungen im Rahmen der Bestimmung der Strategie 27 und/oder der Rahmenbedingungen 29 zurückgehen. Das erfindungsgemäße Verfahren bietet eine große Flexibilität hinsichtlich einer Anpassung an geänderte Bedingungen. Zudem berücksichtigt das erfindungsgemäße Verfahren alle in diesem Zusammenhang relevanten Einflüsse, um eine optimierte Anbaustrategie und/oder der optimierten Fruchtfolgenplanung auszugeben bzw. mit optimierten Parametern anzupassen.

**Bezugszeichenliste**

| | | | |
|---|---|---|---|
| 1 | Verwaltungssystem | 32 | Maßnahmenplan |
| 2 | Landwirtschaftlicher Betrieb | | |
| 3 | Hofstätte | eD | Externe Datenquelle |
| 4 | Feld | iD | Interne Datenquelle |
| 5 | Feld | IF | Inputfaktor |
| 6 | Arbeitsmaschine | OF | Outputfaktor |
| 7 | Anbaugerät | OZ | Optimierungsziel |
| 8 | Lager | | |
| 9 | Silo | | |
| 10 | Arbeits- und Nutzfläche | | |
| 11 | Kommunikationsverbindung | | |
| 12 | Einrichtung zur Datenerhebung | | |
| 13 | Datenbank | | |
| 14 | Auswertevorrichtung | | |
| 15 | Eingabe-Ausgabe-Vorrichtung | | |
| 16 | Recheneinheit | | |
| 17 | Speichereinheit | | |
| 18 | Planungskreislauf | | |
| 19 | Planungsschritt | | |
| 20 | Ausführungsschritt 20 | | |
| 21 | Dokumentationsschritt | | |
| 22 | Prozessschritt | | |
| 23 | Analyseschritt | | |
| 24 | Optimierungsschritt | | |
| 25 | Manueller Prozessschritt | | |
| 26 | Planungsabweichung | | |
| 27 | Teilschritt Strategie | | |
| 28a | Verfahrensschritt Vorgabe | | |
| 28b | Verfahrensschritt Auswahl | | |
| 28c | Verfahrensschritt Gewichtung | | |
| 29 | Teilschritt Rahmenbedingungen | | |
| 30 | Ablaufplan | | |
| 31 | Anbauplan | | |

## Patentansprüche

1. Verfahren zur Bestimmung einer optimierten landwirtschaftlichen Anbaustrategie durch ein computergestütztes landwirtschaftliches Verwaltungssystem (1), **gekennzeichnet durch** die Verfahrensschritte:
- Bestimmen von Inputfaktoren (IF) durch Abfrage und/oder Auswertung von die zu bestimmende Anbaustrategie und/oder Fruchtfolgenplanung beeinflussenden Informationen, die in dem Verwaltungssystem (1) und in von dem Verwaltungssystem (1) unabhängigen externen Datenquellen (eD) hinterlegt sind oder an diese übermittelt werden;
- Bestimmen und Vorgeben mehrerer Optimierungsziele (OZ), die von dem Verwaltungssystem (1) durch Auswertung der Inputfaktoren (IF) vorgegeben werden;
- Auswählen zumindest eines der vorgegebenen Optimierungsziele (OZ) mittels einer Eingabe-Ausgabeeinheit (15);
- Optimieren einer Anbaustrategie und/oder Fruchtfolgenplanung für das zumindest eine ausgewählte Optimierungsziel (15) unter Einbeziehung der bestimmten Inputfaktoren (IF) sowie von Ressourcenplanung und Ressourcenmanagement; und
- Ausgeben der optimierten Anbaustrategie und/oder der optimierten Fruchtfolgenplanung mittels der Eingabe-Ausgabeeinheit (15).

2. Verfahren nach Anspruch 1, **dadurch gekennzeichnet, dass** für die ausgegebene optimierte Anbaustrategie und/oder optimierte Fruchtfolgenplanung von dem Verwaltungssystem (1) Outputfaktoren (OF) bestimmt und bereitgestellt werden, welche, aufeinander abgestimmt, Art, Ort, Menge und Zeitpunkt von einzusetzenden Ressourcen beschreiben.

3. Verfahren nach Anspruch 1 oder 2, **dadurch gekennzeichnet, dass** die Inputfaktoren (IF) aus zumindest einer Datenbank (13) als interner Datenquelle (iD) des Verwaltungssystems (1) abgerufen sowie anhand von aus den externen Datenquellen (eD) abrufbaren Geoinformation und/oder Umweltinformationen zu einem spezifischen Anbaugebiet, die sensorisch erfasst werden, Anbaupräferenzen, langfristigen Wetterprognosen und/oder eines auswählbaren Risikobereitschaftsfaktors bestimmt werden.

4. Verfahren nach einem der Ansprüche 1 bis 3, **dadurch gekennzeichnet, dass** als Optimierungsziel (OZ) zumindest eines aus der Gruppe Ertragsmaximierung, ressourcenschonende Bearbeitung, Umweltverträglichkeit. liquiditätsschonende Bearbeitung, geringster Aufwand, Gewinnoptimierung oder umsatzstärkste Fruchtfolge ausgewählt wird.

5. Verfahren nach einem der Ansprüche 1 bis 4, **dadurch gekennzeichnet, dass** bei einer Auswahl mehrerer Optimierungsziele (OZ) eine durch einen veränderbaren Gewichtungsparameter einstellbare Gewichtung vorgenommen wird.

6. Verfahren nach einem der vorangehenden Ansprüche, **dadurch gekennzeichnet, dass** eine zyklische Aktualisierung und Anpassung von wenigstens einem Inputfaktor (IF) durchgeführt wird.

7. Verfahren nach Anspruch 6, **dadurch gekennzeichnet, dass** eine Aktualisierung des wenigstens einen Inputfaktors (IF) durch eine Übertragung und Auswertung von mittels einer Einrichtung zur Datenerhebung (12) sensorisch erfassten Arbeitsdaten zumindest einer mit dem Verwaltungssystem (1) kommunizierenden Arbeitsmaschine (6) und/oder zumindest eines Anbaugerätes (7) während oder nach der jeweiligen Durchführung eines landwirtschaftlichen Arbeitsvorganges durchgeführt wird.

8. Verfahren nach einem der vorangehenden Ansprüche, **dadurch gekennzeichnet, dass** ein detaillierter Ablaufplan (30) für die Durchführung der optimierten Anbaustrategie und/oder der optimierten Fruchtfolgenplanung durch das Verwaltungssystem (1) erstellt und ausgegeben wird.

9. Verfahren nach Anspruch 8, **dadurch gekennzeichnet, dass** der bestimmte Ablaufplan (30) in dem Verwaltungssystem (1) abrufbar hinterlegt wird.

10. Verfahren nach Anspruch 8 oder 9, **dadurch gekennzeichnet, dass** der bestimmte Ablaufplan (30) für zumindest einen erntegutspezifischen Zeitraum erstellt wird.

11. Verfahren nach einem der Ansprüche 8 bis 10, **dadurch gekennzeichnet, dass** der bestimmte Ablaufplan (30) durch das Verwaltungssystem (1) fortlaufend aktualisiert wird.

12. Verfahren nach einem der Ansprüche 5 bis 11, **dadurch gekennzeichnet, dass** in Abhängigkeit von der Gewichtung die Inputfaktoren (IF) autonom durch das Verwaltungssystem (1) bestimmt werden, welche einer fortlaufenden Aktualisierung bedürfen.

13. Verfahren nach einem der vorangehenden Ansprüche, **dadurch gekennzeichnet, dass** mehrere unterschiedliche Standard-Anbaustrategien oder Standard-Fruchtfolgenplanungen in dem Verwaltungssystem (1) hinterlegt werden, die als Grundlage für das Optimieren einer Anbaustrategie oder Fruchtfolgenplanung verwendet werden.

14. Computergestütztes landwirtschaftliches Verwaltungssystem (1), eingerichtet zur Durchführung eines Verfahrens zur Bestimmung einer optimierten landwirtschaftlichen Anbaustrategie nach einem der Ansprüche 1 bis 13.
